**Europäisches Patentamt**

**European Patent Office**

**Office européen des brevets**

(19)

(11) Veröffentlichungsnummer: **0 085 430**
**B1**

(12) # EUROPÄISCHE PATENTSCHRIFT

(45) Veröffentlichungstag der Patentschrift:
04.06.86

(51) Int. Cl.⁴: **H 02 M 7/537**

(21) Anmeldenummer: **83100940.2**

(22) Anmeldetag: **01.02.83**

(54) **Wechselrichter zur Umformung einer Gleichspannung in eine Wechselspannung.**

(30) Priorität: **03.02.82 DE 3203478**

(43) Veröffentlichungstag der Anmeldung:
**10.08.83 Patentblatt 83/32**

(45) Bekanntmachung des Hinweises auf die Patenterteilung:
**04.06.86 Patentblatt 86/23**

(84) Benannte Vertragsstaaten:
**AT BE CH DE FR GB IT LI NL SE**

(56) Entgegenhaltungen:
**GB - A - 2 015 834**
**US - A - 3 579 081**
**US - A - 3 867 643**
**US - A - 4 270 163**

(73) Patentinhaber: **Fraunhofer-Gesellschaft zur Förderung der angewandten Forschung e.V., Leonrodstrasse 54, D-8000 München 19 (DE)**

(72) Erfinder: **Schmid, Jürgen, Dr. Ing., Fasanenweg 1, D-7814 Breisach-Niederrimsingen (DE)**
Erfinder: **Schätzle, Rainer, Ing. (grad.), Kirchstrasse 16, D-7809 Gutach (DE)**

(74) Vertreter: **Kilian, Helmut, Dr. et al, Wilhelms, Kilian & Partner Patentanwälte Eduard-Schmid-Strasse 2, D-8000 München 90 (DE)**

## Beschreibung

Die Erfindung betrifft einen Wechselrichter zur Umformung einer Gleichspannung in eine Wechselspannung mit einer Anzahl von n zwischen zwei Ausgängen hintereinander geschalteten Schaltungseinheiten, von denen jede eine Reihenschaltung aus einer Gleichspannungsquelle und einem einen Schaltanschluss aufweisenden Schalter und ein zu der Reihenschaltung parallel liegendes unidirektional leitendes Schaltkreiselement umfasst, und einer die Schaltanschlüsse der Schalter diese leitend oder nicht-leitend machend ansteuernden Steuereinheit.

Wechselrichter für die Versorgung von Wechselspannungsverbrauchern aus Gleichspannungsquellen sind z.B. bei netzgekoppelten Photovoltaik-Anlagen erforderlich, um die von den Solarzellen erzeugte Gleichspannung in eine Wechselspannung gleicher Frequenz und Spannung wie die des Netzes umzuformen. Weiter werden derartige Wechselrichter benötigt, wenn mit Hilfe von z.B. wiederaufladbaren Batterien die unterbrechungsfreie Notstromversorgung von Wechselspannungsnetzen gewährleistet werden soll.

Es ist bekannt, dass hierzu ein- oder mehrphasige Wechselrichter oder auch Pulswechselrichter eingesetzt werden. Diese Wechselrichter benötigen in der Regel Drosselelemente, Siebglieder und Transformatoren. Solche Elemente sind teuer und begrenzen den maximalen Wirkungsgrad und den wirtschaftlichen Einsatzbereich derartiger Umformer. Es ist weiterhin bekannt, dass die sinusförmige Wechselspannung ohne Drossel- und Siebglieder und ohne Transformatoren durch Serienschaltung von Gleichspannungsquellen gleicher Spannung im Rhythmus der gewünschten Sinus-Ausgangsspannung angenähert wird (G.J. Naaijer, New Type of Transformerless High Efficiency Inverter, Third E.C. Photovoltaic Solar Energy Conference Oct. 1980). Diese Schaltungsart ist jedoch nur für eine grobe Unterteilung der Sinusspannungswellenform wirtschaftlich durchzuführen, da für jede Abstufung eine Schaltstufe benötigt wird. Derartige grobe Abstufungen erzeugen jedoch einen relativ hohen Oberwellengehalt, der speziell bei netzgekoppelten Systemen oder auch bei bestimmten Verbrauchern nicht zugelassen werden kann.

Es ist ferner ein Wechselrichter der eingangs genannten Art bekannt (GB 2 015 834). Bei dieser bekannten Schaltung sind die Spannungswerte der Gleichspannungsquellen in den einzelnen hintereinander geschalteten Schaltungseinheiten ebenfalls einander gleich, so dass die Anzahl der möglichen Spannungsstufen gleich der Anzahl der vorhandenen Schaltungseinheiten ist. Soll die synthetisierte Wechselspannung sehr fein gestuft sein, so ist ein erheblicher Schaltungsaufwand mit der Folge auch einer umfangreichen Steuereinheit notwendig.

Bei einem anders aufgebauten Wechselrichter, der je Schaltungseinheit vier bidirektionale Schaltelemente zur additiven und subtraktiven Überlagerung der Spannungen ihrer Gleichspannungsquellen benötigt, ist es grundsätzlich bekannt, auch Spannungsquellen unterschiedlicher Spannung zu verwenden (US-3 579 081).

Aufgabe der Erfindung ist es, einen Wechselrichter zu schaffen, der mit minimalem Schaltungsaufwand in der Lage ist, aus Gleichspannungen eine Wechselspannung mit sehr feiner Stufung zu synthetisieren.

Diese Aufgabe wird mit einem Wechselrichter der eingangs genannten Art erfindungsgemäss dadurch gelöst, dass die Spannungswerte der Gleichspannungsquellen die Werte $U_\nu = U_0 \cdot 2^{\nu-1}$ sind, wobei $\nu = 1,...., n$ und $U_0$ ein beliebiger Spannungswert ist, und dass als Steuereinheit ein Analog-Digitalwandler mit einem Analogeingang und binären Digitalausgängen vorgesehen ist, dessen Analogeingang eine Musterwechselspannung erhält und von dessen binären Digitalausgängen der $2^{\nu-1}$-Ausgang mit dem Schaltanschluss des Schalters der die Spannungsquelle mit dem Spannungswert $U_\nu$ enthaltenden Schaltungseinheit verbunden ist.

Es werden also Spannungsquellen mit einem Spannungsverhältnis von

$$U1 : U2 : U3 : U4 ... : Un = 1 : 2 : 4 : 8 : 16 : ... 2^{\nu-1}$$

im Binärmodus zusammengeschaltet, wobei zur binären Ansteuerung der entsprechenden Schaltungseinheiten bzw. Schaltstufen der Binärausgang eines Analog-Digitalwandlers verwendet wird, der eine Referenz-Spannung der gewünschten Frequenz und Kurvenform in schneller Folge abtastet.

Die mit der Erfindung erzielten Vorteile bestehen insbesondere darin, dass ein hoher Abstufungsgrad bei der Erzeugung der sinusförmigen Wechselspannung mit wenigen Schaltstufen realisiert werden kann. Z.B. lassen sich mit vier Schaltstufen 16 Spannungszustände oder mit 5 Schaltstufen 32 Spannungszustände erzeugen. Ein weiterer Vorteil, der durch die Verwendung der Binärausgänge des Analog-Digitalwandlers zur Ansteuerung der Schaltstufen zustande kommt, ist der extrem geringe Aufwand zur Steuerung, Regelung und Synchronisierung des Wechselrichters. Insbesondere werden dadurch folgende Eigenschaften erreicht:

a) Automatisch richtige und trägheitslos einstellbare Synchronisation mit der Referenzspannung, die bei netzgekoppelten Systemen die Netzspannung selbst sein kann.

b) Automatische Abschaltung des Wechselrichters bei gewollter Netzabschaltung (z.B. für Wartungszwecke). Dies ist eine wichtige Sicherheitsforderung zum Schutz von Betriebspersonal bei netzgekoppelten Systemen.

c) Automatische Abschaltung des Wechselrichters bei kurzzeitigen Spannungseinbrüchen z.B. nach Blitzeinschlag oder bei Netzkurzschluss. Herkömmliche Generatoren liefern in diesen Fällen grosse Kurzschlussströme in das Netz, die sowohl Netz-Komponenten als auch Generatoren selbst gefährden können, wenn diese nicht durch schnellschaltende Überwachungseinrichtungen entkoppelt werden.

d) Automatische Nachregelung bei Änderung der Netzspannung. Durch die schnelle Abtastung der Netzspannung bei Netzverbundanwendungen folgt der Wechselrichterausgang stets der als Referenz verwendeten Netzspannung. Die zur Leistungsabgabe notwendige Überspannung am Wechselrichter behält damit ihren Wert auch bei Änderungen der Netzspannung bei.

e) Automatische Anpassung an geänderte Netzfrequenzen. Durch die gewählte Schaltung folgt der Wechselrichter-Ausgang allen gewählten Frequenzen, so dass Verbundbetrieb mit 50, 60 oder 400 Hz-Netzen ohne jede Änderung am Wechselrichter möglich ist.

f) Beim Betrieb des Wechselrichters als Notstromaggregat kann die Aufladung von wiederaufladbaren Spannungsquellen aus dem Netz durch geeignete Massnahmen über den Wechselrichter selbst erfolgen. Die Aufladung wird dann über den Analog-Digitalwandler und die Schaltstufen im gleichen Rhythmus vorgenommen wie deren Entladung beim Notbetrieb. Damit wird ein gleichmässiger Voll-Ladezustand auch bei ungleichförmiger Belastung der einzelnen Spannungsquellen erreicht. Dies bedeutet, das Batterien, die beim Entladevorgang unterschiedlich belastet wurden, mit einer Ladestrom-Aufteilung proportional zur Entladestrom-Aufteilung aufgeladen werden, so dass also am Ende des Ladevorgangs wieder ein gleichmässiger Ladezustand erreicht ist.

Eine Ausführungsform der Erfindung wird im folgenden in Verbindung mit der beigefügten Zeichnung beschrieben. Auf dieser zeigt

Fig. 1 die Prinzipschaltung des erfindungsgemässen Wechselrichters bei Netzkopplung, und
Fig. 2 die gemessene Sinushalbwellenfolge (1) am Ausgang der die Schaltstufen bildenden Schaltungseinheiten und die voll erzeugte Sinuswelle (2) an ohmscher Last bzw. am Ausgang der gesteuerten Vollbrückenschaltung für einen mit vier Spannungsquellen betriebenen Wechselrichter.

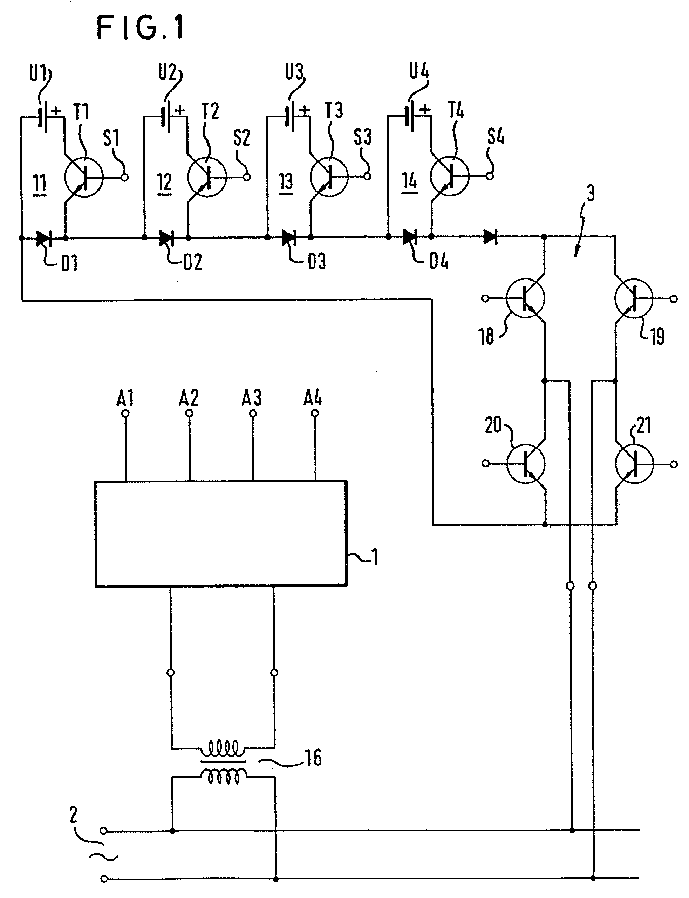

Der in Fig. 1 dargestellte Wechselrichter umfasst vier hintereinander geschaltete Schaltstufen 11, 12, 13, 14, die jeweils aus einer Reihenschaltung aus einer Gleichspannungsquelle Uv und einem über die Kollektor-Emitterstrecke geschalteten Transistor Tv und einer zu dieser Reihenschaltung parallel liegenden Diode Dv (v = 1, 2, 3, 4) bestehen. Die Dioden Dv sind alle gleichsinnig und so gepolt, dass sie bei durchgeschaltetem Transistor Tv einen Kurzschluss der Spannungsquelle Uv verhindern. Bei gesperrtem Transister Tv überbrücken sie die Reihenschaltung aus Spannungsquelle und Transistor. Die Spannungswerte der Gleichspannungsquellen U1, U2, U3 und U4 verhalten sich wie 1:2:4:8.

Ferner ist ein Analog-Digitalwandler 1 vorgesehen, der mit seinem Analogeingang über einen Trenntransformator 16 an ein Wechselspannungsnetz 2 angeschlossen ist. Beim Auftreten einer Netzspannung im Netz 2 erscheint an den binären Digitalausgängen A1 bis A4 des Analog-Digitalwandlers ein der momentanen Netzspannung proportionales Binärsignal. Dieses Binärsignal wird über eine potentialfreie Kopplung den Schaltanschlüssen der Schalter der Schaltstufen, d.h. im vorliegenden Fall den Basisanschlüssen S1 bis S4 der Transistoren T1 bis T4 zugeführt und zwar derart, dass der Ausgang A1 mit S1, der Ausgang A2 mit S2 usw. verbunden ist. Solange am Eingang des Analog-Digitalwandlers 1 keine Spannung anliegt, sind seine Ausgänge A1 bis A4 signalfrei und die Transistoren T1 bis T4 gesperrt. Das bei Auftreten einer Wechselspannung am Eingang des Analog-Digitalwandlers an seinen Ausgängen auftretende Binärsignal schaltet entsprechend seiner Konfiguration bestimmte bzw. alle der Transistoren T1 bis T4 durch. Im einzelnen werden diejenigen Transistoren durchgeschaltet, deren Basis mit einem auf H liegenden Ausgang des Analog-Digitalwandlers verbunden sind. Diejenigen Transistoren, deren Basis mit einem auf L liegenden Ausgang des Analog-Digitalwandlers verbunden ist, bleiben gesperrt. Sind beispielsweise die Binärausgänge A1 und A3 des Analog-Digitalwandlers H und die beiden anderen Ausgänge A2 und A4 L (Binärdarstellung der Zahl 5) dann werden der Transistor T1 und der Transistor T3 durchgeschaltet und am Ausgang der Serienschaltung der Schaltstufen ergibt sich eine Spannung U = U1+U3 = 5 U1. Es entsteht also zwischen den Ausgängen der Serienschaltung aus den Schaltstufen 11 bis 14 eine dem Binärsignal am Ausgang des Analog-Digitalwandlers 1 proportionale Analogspannung.

Die Ausgänge dieser Serienschaltung aus den Schaltstufen 11 bis 14 sind mit den Eingängen einer gesteuerten Vollbrückenschaltung 3 verbunden. Diese Vollbrückenschaltung ist aus vier Transistoren 18, 19, 20, 21 aufgebaut, die über ihre Kollektor-Emitterstrecken paarweise (18, 20 bzw. 19, 21) in Reihe liegen, wobei die beiden so gebildeten Transistorreihenschaltungen parallel liegen. Die Ausgänge der Vollbrückenschaltung sind die gemeinsamen Punkte eines Paares in Reihe geschalteter Transistoren. Die Basen der vier Transistoren 18 bis 21 werden (in nicht gezeigter Weise) durch die Polarität der am Eingang des Analog-Digitalwandlers 1 liegenden Wechselspannung so angesteuert, dass für die positive Halbwelle die zu verschiedenen Reihenpaaren gehörigen und diagonal in der Schaltung liegenden Transistoren 18 und 21 und für die negative Halbwelle die beiden anderen Transistoren 19 und 20 durchgeschaltet sind. Damit wird die bei dieser Ausführungsform an den Ausgängen der Serienschaltung erzeugte Sinushalbwellenfolge zu einer echten Sinuswechselspannung umgeformt.

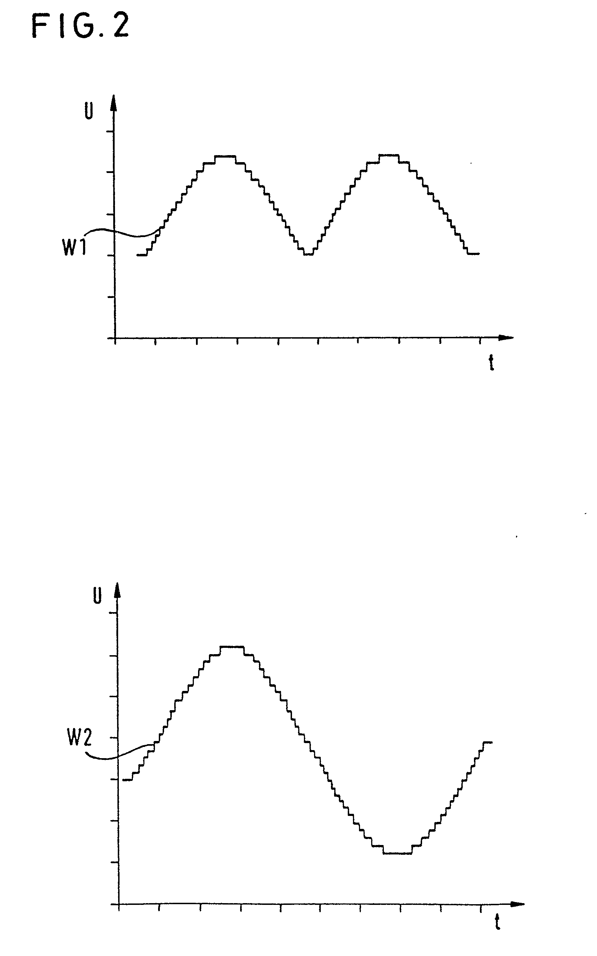

Fig. 2 zeigt die gemessene Sinushalbwellenfolge (W1) am Ausgang der Schaltstufen und die voll erzeugte Sinuswelle (W2) an ohmscher Last und am Ausgang der gesteurten Vollbrücke für den in Fig. 1 dargestellten Fall eines mit vier Spannungsquellen betriebenen Wechselrichters.

## Patentansprüche

1. Wechselrichter zur Umformung einer Gleichspannung in eine Wechselspannung, mit einer Anzahl von n zwischen zwei Ausgängen hintereinander geschalteten Schaltungseinheiten (11–14), von denen jede eine Reihenschaltung aus einer Gleichspannungsquelle (U1–U4) und einem einen Schaltanschluss (S1–S4) aufweisenden Schalter (T1–T4) und ein zu der Reihenschaltung parallel liegendes unidirektional leitendes Schaltkreiselement (D1–D4) umfasst, und mit einer die Schaltanschlüsse der Schalter diese leitend oder nicht-leitend machend ansteuernden Steuereinheit (1), dadurch gekennzeichnet, dass die Spannungswerte der Gleichspannungsquellen die Werte $U\nu = U_0 \cdot 2^{\nu-1}$ sind, wobei $\nu = 1,..., n$ und $U_0$ ein beliebiger Spannungswert ist, und dass als Steuereinheit ein Analog-Digitalwandler (1) mit einem Analogeingang und binären Digitalausgängen vorgesehen ist, dessen Analogeingang eine Musterwechselspannung erhält und von dessen binären Digitalausgängen der $2^{\nu-1}$-Ausgang (A1–A4) mit dem Schaltanschluss (S1–S4) des Schalters der die Spannungsquelle mit dem Spannungswert $U\nu$ enthaltenden Schaltungseinheit verbunden ist.

2. Wechselrichter nach Anspruch 1, dadurch gekennzeichnet, dass eine Vollbrückenschaltung (3) mit zwei Eingängen und zwei Ausgängen vorgesehen ist, dass die beiden Ausgänge der hintereinander geschalteten Schaltungseinheiten (11–14) mit den Eingängen der Vollbrückenschaltung verbunden sind und dass die Vollbrückenschaltung in Abhängigkeit von der Musterwechselspannung gesteuert wird, derart, dass die Polarität der Wechselspannung an den Ausgängen der Vollbrückenschaltung eine Funktion der Polarität der Musterwechselspannung ist.

3. Wechselrichter nach Anspruch 2, dadurch gekennzeichnet, dass die Wechselspannung an den Ausgängen der Vollbrückenschaltung (3) in das Netz (2) gekoppelt ist und dass die Musterspannung die Netzspannung selbst ist.

4. Wechselrichter nach einem der Ansprüche 1 und 2, dadurch gekennzeichnet, dass als Spannungsquellen (U1–U4) wiederaufladbare Batterien vorgesehen sind und dass die Aufladung über den Wechselrichter selbst durch rückwärtsleitende Schaltstufen durchgeführt wird, die während des Aufladevorgangs vom Analog-Digital-Wandler (1) in gleichem Rhythmus angesteuert werden wie beim Entladevorgang.

## Claims

1. An inverter for converting a direct voltage into an alternating voltage, having a number of n circuit units (11–14) connected in series between two outputs, each circuit unit comprising a series connection, having a direct voltage source (U1–U4) and a switch (T1–T4) with a switching connection (S1–S4), and a unidirectionally conducting circuit element (D1–D4) disposed in parallel with the series connection, the inverter having a control unit (1) which operates the switching connections of the switches to render the switches conductive or non-conductive, characterized in that voltage values of the direct voltage sources are the values $U\nu = U_0 \cdot 2^{\nu-1}$ with $\nu = 1, ...,$ n and $U_0$ being any desired voltage value, and that the control unit is an analog-to-digital converter (1) having an analog input and binary digital outputs whose analog input receives a reference alternating voltage and out of whose binary digital outputs the $2^{\nu-1}$ output (A1–A4) is connected to the switching connection (S1–S4) of the switch of the circuit unit containing the voltage source having the voltage value $U\nu$.

2. An inverter according to claim 1, characterized in that a full wave bridge circuit,(3) is provided which has two inputs and two outputs, that the two outputs of the circuit units (11–14) connected in series are connected to the inputs of the full wave bridge circuit, and that the full wave bridge circuit is so controlled, in dependence on the reference alternating voltage, that the polarity of the alternating voltage at the outputs of the full wave bridge circuit is a function of the polarity of the reference alternating voltage.

3. An inverter according to claim 2, characterized in that the alternating voltage at the outputs of the full wave bridge circuit (3) is connected to the mains (2), and that the reference voltage is the mains voltage itself.

4. An inverter according to any one of the claims 1 and 2, characterized in that rechargeable batteries are provided as the voltage sources (U1–U4), and that the charging is performed via the inverter itself through backward-leading switching stages which are operated by the analog-to-digital converter during the charging process at the same rhythm as during the discharging process.

## Revendications

1. Onduleur pour la conversion d'une tension continue en une tension alternative, comportant un nombre de n unités de circuit (11–14) montées l'une derrière l'autre entre deux sorties et dont chacune contient un montage série d'une source de tension continue (U1–U4) et d'un commutateur (T1–T4) présentant une borne de raccordement (S1–S4), et un élément de circuit (D1–D4) à conduction unidirectionnelle et se trouvant en parallèle au montage série, et une unité de commande attaquant les bornes de raccordement des commutateurs en rendant ceux-ci conducteurs ou non conducteurs, caractérisé en ce que les valeurs de tension des sources de tension continue ont les valeurs $U\nu = U_0 \cdot 2^{\nu-1}$, avec $\nu = 1,$ ..., n et $U_0$ est une valeur choisie de tension, et en ce qu'il est prévu comme unité de commande un convertisseur analogique/numérique (1) présentant une entrée analogique et des sorties numériques binaires et dont l'entrée analogique reçoit une tension alternative modèle et la sortie numérique binaire de la $2^{v-1}$ème sortie (A1–A4) est reliée à la borne de raccordement (S1–S4) de commutateur de l'unité de circuit contenant la source de tension ayant la valeur de tension Uv.

2. Onduleur selon la revendication 1, caractérisé en ce qu'il est prévu un montage en pont intégral (3) présentant deux entrées et deux sorties, en ce que les deux sorties des unités de circuit (11–14) montées l'une derrière l'autre sont reliées aux entrées du montage en pont intégral et en ce que le montage en pont intégral est commandé en fonction de la tension alternative modèle de façon que la polarité de la tension alternative existant sur les sorties du montage en pont intégral soit une fonction de la polarité de la tension alternative modèle.

3. Onduleur selon la revendication 2, caractérisé en ce que la tension alternative existant sur les sorties du montage en pont intégral (3) est couplée au réseau (2) et en ce que la tension modèle est la tension elle-même du réseau.

4. Onduleur selon l'une des revendications 1 et 2, caractérisé en ce qu'il est prévu comme sources de tension (U1–U4) des batteries rechargeables et en ce que la charge s'effectue par l'intermédiaire de l'onduleur lui-même à travers des étages-circuits à conduction inverse qui, pendant l'opération de charge, sont commandés à partir du convertisseur analogique/numérique (1) à la même cadence que lors de l'opération de décharge.

**0 085 430**

FIG.1

# FIG. 2